(19) Europäisches Patentamt / European Patent Office / Office européen des brevets

(11) **EP 4 063 056 A1**

(12)
# EUROPEAN PATENT APPLICATION
published in accordance with Art. 153(4) EPC

(43) Date of publication:
**28.09.2022 Bulletin 2022/39**

(21) Application number: **21797557.2**

(22) Date of filing: **29.03.2021**

(51) International Patent Classification (IPC):
**B23K 9/095** (2006.01)  **G06N 20/00** (2019.01)

(52) Cooperative Patent Classification (CPC):
**B23K 9/095; B23K 9/10; B25J 13/08; G06N 3/04; G06N 20/00**

(86) International application number:
**PCT/JP2021/013400**

(87) International publication number:
**WO 2021/220698 (04.11.2021 Gazette 2021/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.04.2020 JP 2020080006**

(71) Applicant: **KABUSHIKI KAISHA KOBE SEIKO SHO (KOBE STEEL, LTD.)**
**Hyogo 651-8585 (JP)**

(72) Inventors:
• **ISHIZAKI, Keito**
**Fujisawa-shi, Kanagawa 251-8551 (JP)**

• **FURUKAWA, Naohide**
**Fujisawa-shi, Kanagawa 251-8551 (JP)**
• **KOIKE, Takeshi**
**Fujisawa-shi, Kanagawa 251-8551 (JP)**
• **KIMURA, Yuji**
**Fujisawa-shi, Kanagawa 251-8551 (JP)**
• **OKAMOTO, Akira**
**651-2271, Kobe-shi, Hyogo (JP)**
• **OZAKI, Keita**
**651-2271, Kobe-shi, Hyogo (JP)**

(74) Representative: **Müller-Boré & Partner**
**Patentanwälte PartG mbB**
**Friedenheimer Brücke 21**
**80639 München (DE)**

(54) **LEARNING MODEL GENERATION METHOD, LEARNING MODEL, AND PROGRAM FOR WELDING INFORMATION, AND WELDING SYSTEM**

(57) This learning model generation method is for generating a learning model for learning by taking, as teaching data, image data from a visual sensor and welding information extracted from the image data, wherein: a plurality of welding conditions to be used for generating the learning model correspond to the difference in setting pertaining to at least one item; the image data corresponding to each of the plurality of welding conditions includes at least one of a molten pool, a welding wire, and an arc; the welding information includes at least one of information pertaining to the behavior of the molten pool, information pertaining to the position of the welding wire, and information pertaining to the arc; and the learning model which receives the image data as an input and outputs the welding information is generated.

EP 4 063 056 A1

# FIG. 5

**Description**

Technical Field

The present invention relates to welding-information learning-model generation methods, learning models, programs, and welding systems.

Background Art

In recent years, in the field of welding, technology for automatically creating or adjusting optimal welding conditions has been realized. For example, for the purpose of automatically creating optimal welding conditions, Patent Literature 1 discloses "a mechanism learning device (30) that learns to set at least one arc welding condition, the mechanism learning device (30) comprising: a state observing unit (31) that observes a state variable constituted of at least one physical value related to arc welding at least while arc welding is being executed or after the arc welding is executed and the at least one arc welding condition; and a learning unit (35) that performs learning by associating a change in the at least one physical value observed by the state observing unit with the at least one arc welding condition".

Citation List

Patent Literature

PTL 1: Japanese Unexamined Patent Application Publication No. 2017-30014

Summary of Invention

Technical Problem

Patent Literature 1 uses, as physical values, the waveform of a welding current and the waveform of a welding voltage obtained from a current-voltage measuring unit, image data of a weld section captured by an imaging unit, and information extracted from the image data. The information extracted from the image data refers to an external appearance of a weld bead, an excess bead height, a bead width, and an amount of spatter.

A welding phenomenon varies depending on different combinations of the welding current, the arc voltage, the tip-to-base distance (also referred to as " electrode extension " hereinafter), the shape of an object to be welded (also referred to as "workpiece" hereinafter), the welding position , the position of a visual sensor, and other arc welding conditions (also referred to as "welding conditions" hereinafter).

Furthermore, the welding phenomenon may vary not only in accordance with different combinations but also in accordance with different settings of each welding condition.

Patent Literature 1 does not mention the effect that the different settings of each welding condition have on the welding phenomenon.

Thus, in the case of Patent Literature 1, if a set welding condition used for the learning of the learning model and a set welding condition used in real welding are different from each other, the accuracy of the physical value (also referred to as "welding information" hereinafter) automatically extracted from the welding phenomenon is not stable, possibly causing an erroneous process to be executed based on erroneously extracted welding information.

An object of the present invention is to generate a learning model capable of stably extracting welding information with high accuracy from captured image data regardless of various welding conditions set in actual welding.

Solution to Problem

For achieving the aforementioned object, one aspect of the invention provides a welding-information learning-model generation method for generating a learning model that outputs welding information corresponding to image data when the learning model receives the image data output from a visual sensor that captures an image indicating a state of welding. The image data used for generating the learning model is captured with respect to a plurality of settings of at least one welding condition. The image data includes at least one of a molten pool, a welding wire, and an arc. The welding information includes at least one of information related to behavior of the molten pool, information related to a position of the welding wire, and information related to the arc. The learning model is generated by using, as teaching data, the image data and the welding information corresponding to the image data.

The image data preferably corresponds to at least two settings related to at least one of an electrode extension of the welding wire, a shape of a nozzle, lightness of the image data, a shape of an object to be welded, a shape of a contact tip, a welding current, an arc voltage, a welding speed, a weaving condition, and a welding position.

Furthermore, the at least one welding condition is preferably the electrode extension of the welding wire, and the electrode extension is preferably set to a plurality of values selected at least from a range of 10 to 40 mm.

Moreover, the information related to the behavior of the molten pool preferably includes information about at least one position of a leading end of the molten pool appearing in a direction in which the welding proceeds and information about positions of left and right edges of the molten pool relative to the direction in which the welding proceeds.

Furthermore, the information related to the position of the welding wire preferably includes information about a position of a tip of the welding wire.

Moreover, the information related to the arc preferably includes information about a center point of the arc.

Another aspect of the invention provides a learning model that outputs welding information corresponding to image data when the learning model receives the image data output from a visual sensor that captures an image indicating a state of welding. The image data used for generating the learning model is captured with respect to a plurality of settings of at least one welding condition. The image data includes at least one of a molten pool, a welding wire, and an arc. The welding information includes at least one of information related to behavior of the molten pool, information related to a position of the welding wire, and information related to the arc. The learning model is generated by using, as teaching data, the image data and the welding information corresponding to the image data.

Another aspect of the invention provides a program for causing a computer to implement a function for generating a learning model that outputs welding information corresponding to image data when the learning model receives the image data output from a visual sensor that captures an image indicating a state of welding. The function uses, as teaching data, the image data and the welding information corresponding to the image data. The image data used for generating the learning model is captured with respect to a plurality of settings of at least one welding condition. The image data includes at least one of a molten pool, a welding wire, and an arc. The welding information includes at least one of information related to behavior of the molten pool, information related to a position of the welding wire, and information related to the arc.

Another aspect of the invention provides a welding system including welding equipment that welds an object to be welded, a visual sensor that captures an image indicating a state of welding, a learning model that outputs welding information corresponding to image data when the learning model receives the image data output from the visual sensor, and a control device that controls movement of the welding equipment by using the welding information to be output in a case where the image data captured by the visual sensor is input to the learning model. The image data used for generating the learning model is captured with respect to a plurality of settings of at least one welding condition. The image data includes at least one of a molten pool, a welding wire, and an arc. The welding information includes at least one of information related to behavior of the molten pool, information related to a position of the welding wire, and information related to the arc. The control device generates the learning model by using, as teaching data, the image data and the welding information corresponding to the image data.

Furthermore, in this welding system, an additional learning model is preferably provided in addition to the learning model that outputs the welding information corresponding to the image data. The additional learning model receives the welding information output from the learning model and outputs a correction signal of the welding information.

Advantageous Effects of Invention

According to the present invention, a learning model capable of stably extracting welding information with high accuracy from captured image data can be generated regardless of various welding conditions set in actual welding.

Brief Description of Drawings

[Fig. 1] Fig. 1 illustrates a configuration example of an automatic welding system used for describing an embodiment.
[Fig. 2] Fig. 2 is a perspective view illustrating the position where a visual sensor is disposed.
[Fig. 3] Fig. 3 illustrates a configuration example of a robot control device that controls the operation of a welding robot.
[Fig. 4] Fig. 4 illustrates a configuration example of a data processing device.
[Fig. 5] Fig. 5 schematically illustrates a process for generating a learning model.
[Fig. 6] Fig. 6 illustrates an example of a screen used for a teaching process.
[Fig. 7] Fig. 7 is a flowchart illustrating a teaching-learning process of the learning model.
[Fig. 8] Fig. 8 is a flowchart illustrating processes performed by the robot control device and a power supply device.
[Fig. 9] Fig. 9 is a flowchart illustrating a welding-information generation process performed by the data processing device.
[Fig. 10] Fig. 10 illustrates an example of welding conditions used for generating teaching data.

[Fig. 11] Fig. 11 illustrates an output example of welding information corresponding to a first specific example and an output example of welding information corresponding to a first comparative example.

[Fig. 12] Fig. 12 illustrates another example of welding conditions used for generating teaching data.

[Fig. 13] Fig. 13 illustrates an output example in a second specific example in a case where the f-number of a camera is F = 8.

[Fig. 14] Fig. 14 illustrates an output example in the second specific example in a case where the f-number of the camera used in the real welding environment is F = 15.

[Fig. 15] Fig. 15 illustrates an output example in a second comparative example in a case where the f-number of the camera is F = 8.

[Fig. 16] Fig. 16 illustrates an output example in the second comparative example in a case where the f-number of the camera used in the real welding environment is F = 15.

Description of Embodiments

Embodiments of a welding-information learning-model generation method, a learning model, a program, and a welding system according to the present invention will be described below with reference to the appended drawings. The drawings have been created for describing the present invention, and the embodiments of the present invention are not to be limited to the illustrated contents.

[Configuration of Automatic Welding System]

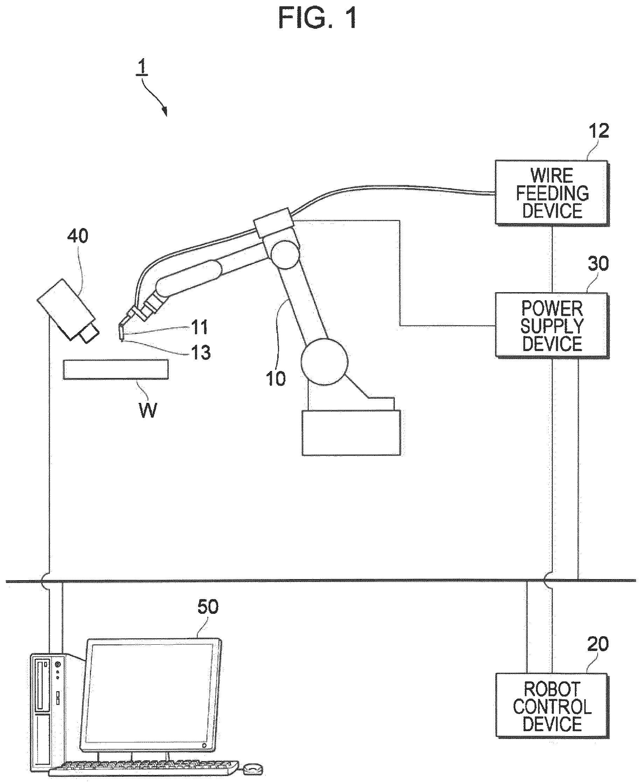

Fig. 1 illustrates a configuration example of an automatic welding system 1 used for describing an embodiment.

The automatic welding system 1 illustrated in Fig. 1 includes a welding robot 10, a robot control device 20, a power supply device 30, a visual sensor 40, and a data processing device 50.

The automatic welding system 1 according to this embodiment has a function for generating a learning model by using, as teaching data, an image of a welding position and welding information taught by an operator with respect to the corresponding image, as well as a function for automatically controlling arc welding by using the generated learning model. The learning model is generated by using deep learning.

The welding robot 10 illustrated in Fig. 1 is a six-axis articulated robot, and a welding torch 11 for arc welding is attached to the distal end of the welding robot 10. Examples of arc welding include MIG (metal inert gas) welding and MAG (metal active gas) welding. In this embodiment, MAG welding is selected.

Alternatively, the welding robot 10 used may be, for example, a portable compact robot.

The welding torch 11 is supplied with a welding wire 13 from a wire feeding device 12. The welding wire 13 is delivered from the distal end of the welding torch 11.

The power supply device 30 is a power supply device that supplies electric power to the welding wire 13. With this electric power, an arc voltage is applied between the welding wire 13 and a workpiece W, whereby an arc is generated. The power supply device 30 is provided with a current sensor (not illustrated) that detects a welding current flowing through the workpiece W from the welding wire 13 during welding.

The power supply device 30 has a CPU (central processing unit) and a memory, which are not illustrated, and controls the electric power applied to the welding wire 13 as a result of the CPU executing a computer program for power-supply control.

The power supply device 30 is also connected to the wire feeding device 12, and the CPU controls the feed rate of the welding wire 13.

The visual sensor 40 is, for example, a CCD (charge-coupled device).

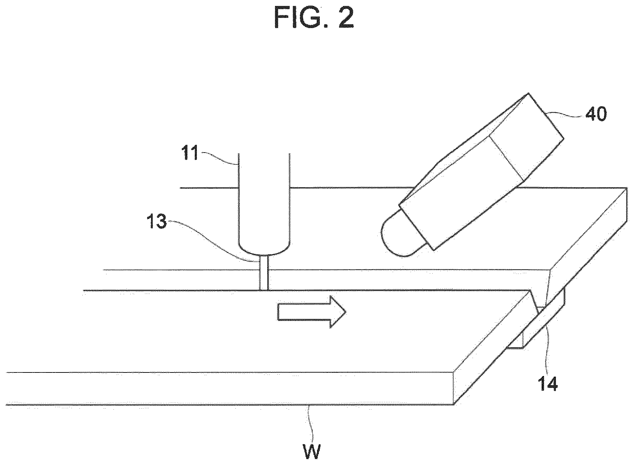

Fig. 2 is a perspective view illustrating the position where the visual sensor 40 is disposed. In the case of this embodiment, the workpiece W is a butt joint. The workpiece W includes two metallic plates butted-joined with a groove interposed therebetween. A ceramic material backing 14 is attached to the underside of the two butt-joined metal plates. Alternatively, a metallic material backing may be used on the underside, or the material backing may be eliminated.

The butt joint undergoes arc welding in one direction along the groove.

In the following description, the direction in which the welding proceeds will be referred to as "forward direction". In Fig. 2, the direction in which the welding proceeds is indicated by an arrow. Thus, the welding torch 11 is positioned behind the visual sensor 40.

Furthermore, in this embodiment, the side at which the right hand is positioned when viewed rearward from the visual sensor 40 will be referred to as "right", and the side at which the left hand is positioned when viewed forward will be referred to as "left".

The workpiece W in this embodiment is disposed horizontally such that the surface that is to undergo welding faces vertically upward. Thus, the welding robot 10 welds the workpiece W from above the workpiece W.

As illustrated in Fig. 2, the visual sensor 40 is disposed diagonally above the welding position of the workpiece W. An imaging range of the visual sensor 40 includes the welding position of the workpiece W and captures an image of the welding position during arc welding. This image includes a molten pool, the welding wire 13, and an arc.

For example, the visual sensor 40 according to this embodiment can successively capture 1024x768 pixel still images. In other words, the visual sensor 40 is capable of capturing welding images as a moving image.

[Configuration of Robot Control Device]

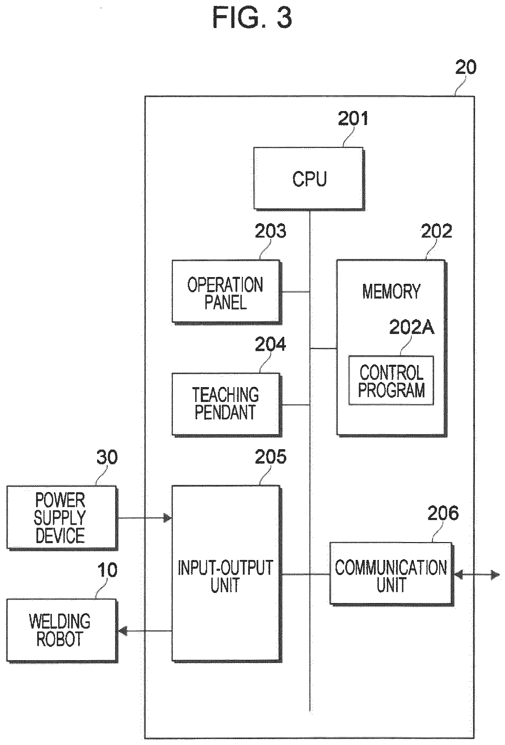

Fig. 3 illustrates a configuration example of the robot control device 20 that controls the operation of the welding robot 10.

The robot control device 20 has a CPU 201 that controls the entire device, a memory 202 that stores data, an operation panel 203 including a plurality of switches, a teaching pendant 204 to be used in a teaching process, an input-output unit 205, and a communication unit 206.

The memory 202 has stored therein a control program 202A to be used for controlling the welding robot 10. The CPU 201 executes the control program 202A to control a welding operation performed by the welding robot 10.

For inputting a command to the robot control device 20, the operation panel 203 and the teaching pendant 204 are used. The operator can use the teaching pendant 204 to input a teaching program.

The robot control device 20 controls the welding operation of the welding robot 10 in accordance with the teaching program input from the teaching pendant 204. The teaching program can also be created by using a computer (not illustrated).

The input-output unit 205 is connected to the power supply device 30 and to a drive circuit of the welding robot 10. For example, a current value of a welding current detected by the current sensor (not illustrated) is input from the power supply device 30 to the CPU 201 via the input-output unit 205. Furthermore, the CPU 201 outputs a control signal based on the control program 202A to the drive circuit of the welding robot 10.

The communication unit 206 is a communication module for wired or wireless communication. The communication unit 206 is used for data communication between the power supply device 30 and the data processing device 50.

The robot control device 20 controls each axis of the welding robot 10 to control the speed of the welding torch 11. In the case of this embodiment, the robot control device 20 controls the speed of the welding torch 11 by using an image recognition result. The speed of the welding torch 11 may be controlled to be constant.

The robot control device 20 also controls a weaving operation of the welding robot 10. A weaving operation involves oscillating the welding torch 11 back and forth in a direction intersecting the welding proceeding direction. The robot control device 20 controls the weaving operation in accordance with preset cycles, amplitude, and welding speed.

The robot control device 20 executes welding-line copying control together with the weaving operation. Welding-line copying control involves controlling the left and right positions of the welding torch 11 such that a bead is formed along a welding line.

[Configuration of Data Processing Device]

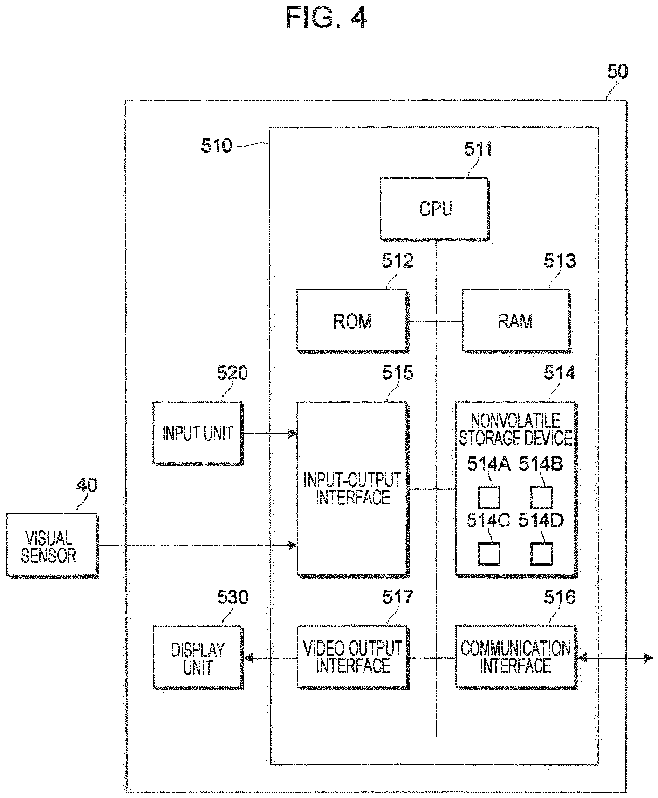

Fig. 4 illustrates a configuration example of the data processing device 50.

The data processing device 50 is constituted of, for example, a computer. The computer includes a main unit 510, an input unit 520, and a display unit 530.

The main unit 510 has a CPU 511, a ROM (read-only memory) 512, a RAM (random access memory) 513, a nonvolatile storage device 514, an input-output interface 515, a communication interface 516, and a video output interface 517.

The CPU 511, the ROM 512, the RAM 513, the nonvolatile storage device 514, the input-output interface 515, the communication interface 516, and the video output interface 517 are connected to one another by a bus and a signal line.

The nonvolatile storage device 514 has stored therein a learning program 514A for executing deep learning by using, as teaching data, captured image data of a welding phenomenon and welding information taught by the operator with respect to the image data, a learning model 514B generated as a result of executing the learning program 514A, a welding-information generation program 514C for generating welding information related to arc welding by using the learning model 514B, and image data 514D of the welding position.

The learning model 514B according to this embodiment is constituted of a convolutional neural network. Additionally; an operating system and an application program are also installed in the nonvolatile storage device 514.

The data processing device 50 implements various types of functions in accordance with execution of a program by the CPU 511.

In this embodiment, the data processing device 50 implements a function for generating a learning model and a function for inputting image data and outputting welding information during actual welding. The contents of these functions will be described later. The data processing device 50 may be divided in accordance with the function for generating a learning model and the function for inputting image data and outputting welding information during actual welding. From the standpoint of versatility, the data processing device 50 is preferably divided in accordance with the respective functions.

The ROM 512 has stored therein, for example, a BIOS (basic input output system) to be executed by the CPU 511. The RAM 513 is used as a work area for a program read from the nonvolatile storage device 514.

The input-output interface 515 is connected to the input unit 520 constituted of a keyboard, a mouse, and so on. The input-output interface 515 is connected to the visual sensor 40. Image data output from the visual sensor 40 is input to the CPU 511 via the input-output interface 515.

The communication interface 516 is a communication module for wired or wireless communication. The video output interface 517 is connected to the display unit 530 constituted of a liquid crystal display or an organic EL (electro-luminescence) display, and outputs a video signal according to video data input from the CPU 511 to the display unit 530.

[Operation of Automatic Welding System]

The operation of the automatic welding system 1 will be described below.

[Generation of Learning Model]

The generation of the learning model 514B will now be described. The learning model 514B is generated by executing the learning program 514A.

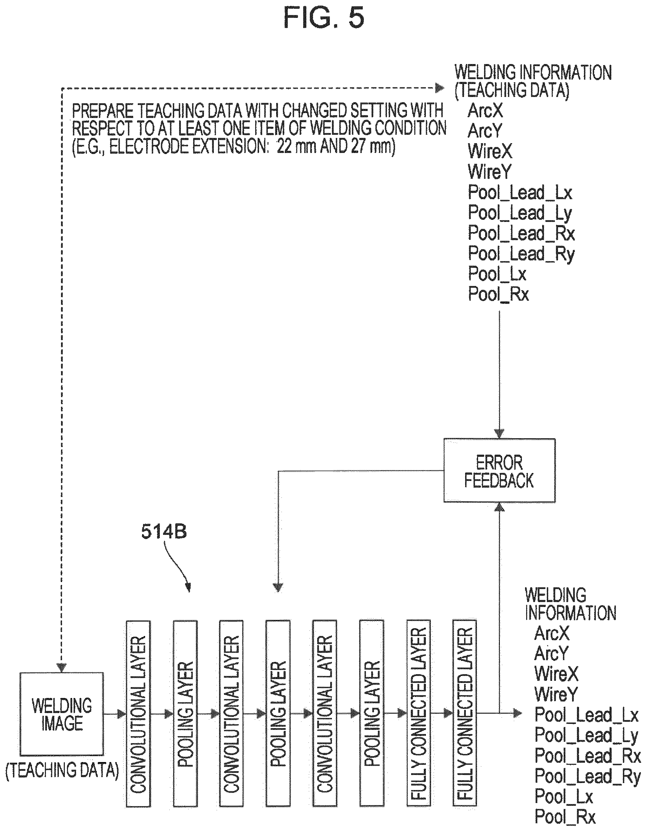

Fig. 5 schematically illustrates a process for generating the learning model 514B. The learning model 514B according to this embodiment is constituted of a convolutional neural network and includes a plurality of convolutional layers, a plurality of pooling layers, and a plurality of fully connected layers.

The learning model 514B receives image data output from the visual sensor 40 and outputs various welding information appearing in the image data.

The image data input to the learning model 514B includes a molten pool, the welding wire 13 (see Fig. 1), and an arc. This image data will be referred to as "welding image" hereinafter.

In this embodiment, welding processes are performed while varying the settings of the welding conditions, and captured welding images indicating the state of the welding processes are prepared.

Examples of the welding conditions in this embodiment include the electrode extension of the welding wire 13, the lightness (f-number) of the image data, the shape of the workpiece W, the shape of a contact tip, the welding current, the arc voltage, the welding speed, the weaving condition, and the position (welding position) of the welding wire 13 relative to the workpiece W.

Examples of the shape of the contact tip include a straight nozzle and a tapered nozzle. Furthermore, examples of information that define the welding position include a drag angle, a push angle, and a deviation of the welding line relative to the groove.

In this embodiment, a plurality of welding processes are performed while varying the setting of the electrode extension among the welding conditions, and captured welding images indicating the state of the welding processes are prepared as teaching data. For example, a welding image in a case where the electrode extension is 22 mm, a welding image in a case where the electrode extension is 27 mm, and a welding image in a case where the electrode extension is 32 mm are prepared. Furthermore, welding information taught by the operator with respect to each of these welding images is prepared as teaching data.

Alternatively, the welding processes may be performed while varying the setting of a welding condition other than the electrode extension, and captured welding images indicating the state of the welding processes and welding information taught by the operator with respect to each of these welding images may be prepared.

In this embodiment, the welding information used include the tip (wire tip) of the welding wire 13, the center point (arc center) of the arc, the positions of left and right leading ends of the molten pool, and the positions of left and right edges of the molten pool.

The welding information to be used as the teaching data is input as a result of the operator designating a specific position on a welding image in accordance with a command via an operation screen used for assisting with the teaching process.

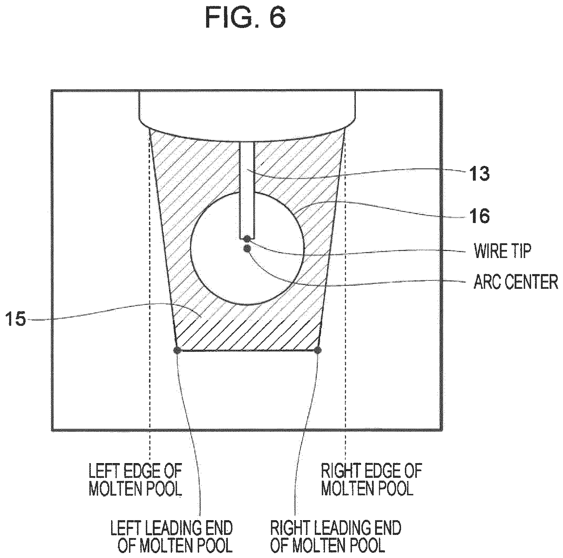

Fig. 6 illustrates an example of a screen used for the teaching process. The welding image illustrated in Fig. 6 includes a molten pool 15, the welding wire 13, and an arc 16. In Fig. 6, the molten pool 15 is indicated as a shaded area.

In the case of this embodiment, the welding information to be taught by the operator include the coordinate position (ArcX, ArcY) of the arc center, the coordinate position (WireX, WireY) of the wire tip, the coordinate position (Pool_Lead_Lx, Pool_Lead_Ly) of the left leading end of the molten pool, the coordinate position (Pool_Lead_Rx, Pool_Lead_Ry) of the right leading end of the molten pool, the coordinate position (Pool_Lx) of the left edge of the molten pool, and the coordinate position (Pool_Rx) of the right edge of the molten pool.

The welding information is input as a result of the operator designating a specific position on the screen.

The coordinates indicating the boundary between the welding wire 13 and the arc are an example of the positional coordinates of the wire tip.

The left leading end of the molten pool, the right leading end of the molten pool, the left edge of the molten pool, and the right edge of the molten pool are examples of information related to the behavior of the molten pool 15. Once the left edge of the molten pool and the right edge of the molten pool are determined, the width of the molten pool 15 can be calculated.

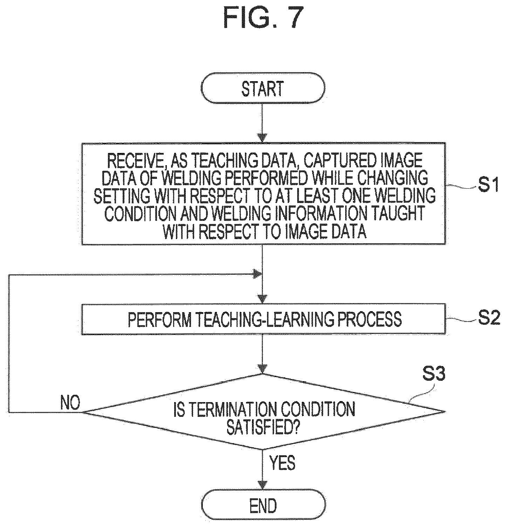

Fig. 7 is a flowchart illustrating a teaching-learning process of the learning model 514B. Each symbol S in the drawing denotes a step.

When the teaching-learning process is to be executed, the CPU 511 (see Fig. 4) of the data processing device 50 (see Fig. 1) receives, as teaching data, captured image data of welding performed by changing the setting of at least one of the welding conditions and welding information taught with respect to the image data (step 1).

As mentioned above, the welding information is prepared in advance by the operator. In the case of this embodiment, a welding image used as the teaching data is, for example, a gray-scale image reduced in size to 120x100 pixels.

Subsequently, the CPU 511 inputs the gray-scale image serving as the teaching data to the learning model 514B and executes the teaching-learning process such that the welding information to be output matches the welding information serving as the teaching data (step 2). In detail, for example, backpropagation is executed as error feedback, so that layer and interlayer parameters of the learning model 514B are adjusted.

Subsequently, the CPU 511 determines whether or not a termination condition is satisfied (step 3). A termination condition indicates that, for example, an error average in a predetermined number of most recent pieces of teaching data is below a predetermined value.

If the termination condition is not satisfied (i.e., if a negative result is obtained in step 3), the CPU 511 returns to step 2 and continues with the teaching-learning process. In contrast, if the termination condition is satisfied (i.e., if a positive result is obtained in step 3), the CPU 511 ends the generation of the learning model 514B.

[Actual Welding using Generated Learning Model]

The welding operation of the automatic welding system 1 in actual welding will be described below.

When arc welding is to be performed, the operator activates the robot control device 20, the power supply device 30, and the data processing device 50.

The robot control device 20 controls the movement of the welding robot 10, and the power supply device 30 executes welding. Furthermore, the data processing device 50 monitors a welding image captured by the visual sensor 40 and sequentially calculates welding information related to the arc welding.

In this embodiment, the welding information includes the position of the wire tip, the arc center, the positions of the right and left leading ends of the molten pool, and the positions of the right and left edges of the molten pool.

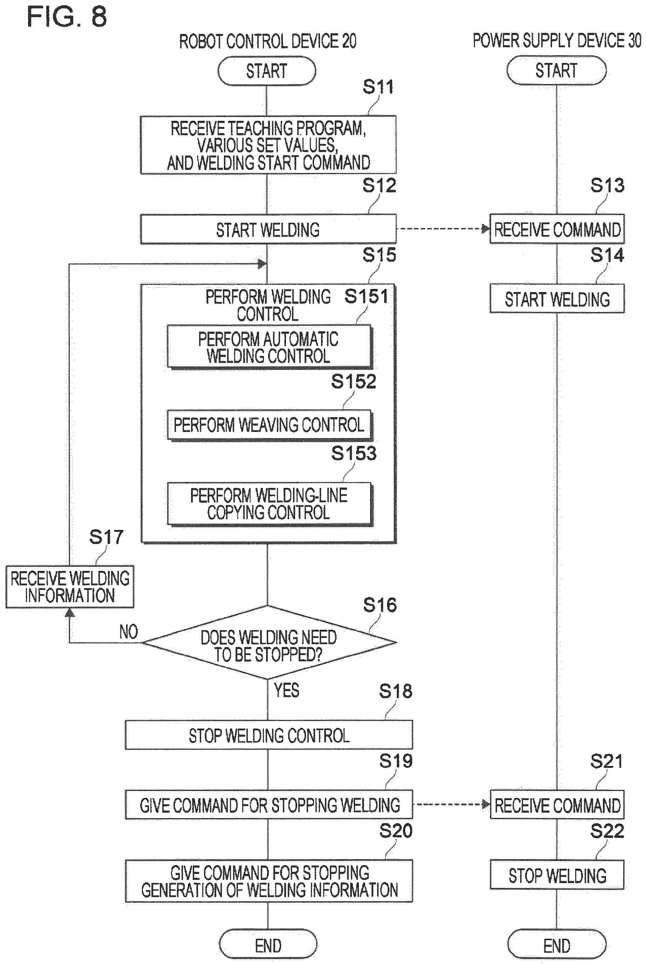

Fig. 8 is a flowchart illustrating processes performed by the robot control device 20 and the power supply device 30. Each symbol S in the drawing denotes a step.

When arc welding is to be commenced, the operator operates the teaching pendant 204 (see Fig. 3) and inputs a teaching program, various kinds of set values, and a welding start command to the robot control device 20. The teaching program in this case defines, for example, the movement of the welding robot 10 (see Fig. 1).

The CPU 201 (see Fig. 3) of the robot control device 20 receives the teaching program, the various kinds of set values, and the welding start command (step 11).

The CPU 201 commands the power supply device 30 to start welding (i.e., start supplying welding power) (step 12). The power supply device 30 receives this command (step 13) and controls a power supply circuit contained in the power supply device 30 so as to start welding (step 14). Accordingly, a welding voltage is applied between the welding wire 13 (see Fig. 1) and the workpiece W (see Fig. 1), whereby an arc is generated.

Then, the CPU 201 transmits a control signal to the welding robot 10 and executes welding control (step 15). Welding control includes automatic welding control (step 151), weaving control (step 152), and welding-line copying control (step 153).

In automatic welding control, the CPU 511 transmits a correction signal for controlling at least one of the welding speed, the welding current, and the arc voltage to the power supply device 30 while automatically moving the welding torch 11 in the welding direction, and the power supply device 30 executes welding in accordance with the correction signal. From the standpoint of facilitating the control, the automatic welding control preferably includes control of the welding speed, and only includes control of the welding speed in this embodiment.

The CPU 201 determines whether or not the welding operation needs to be stopped (step 16). If the welding operation does not need to be stopped (i.e., if a negative result is obtained in step 16), the robot control device 20 receives welding information from the data processing device 50 (step 17) and returns to step 15. The CPU 201 having returned to step 15 executes welding control based on the received welding information.

For example, if a command for stopping the welding operation is received from the operator, if a welding termination position is detected by a sensor provided in the welding robot 10, if a welding abnormality is detected, or if the welding termination position and the welding abnormality are both detected (i.e., if a positive result is obtained in step 16), the CPU 201 determines that the welding operation needs to be stopped.

In this case, the CPU 201 stops performing the welding control (step 18) and commands the power supply device 30 to stop the welding operation (step 19). The welding operation is stopped by stopping the supply of welding power.

Furthermore, the CPU 201 commands the data processing device 50 to stop generating welding information (step 20).

On the other hand, when the power supply device 30 receives the welding stoppage command (step 21), a CPU (not illustrated) controls the power supply circuit to stop welding (step 22). Accordingly, the operation of the robot control device 20 and the power supply device 30 ends.

The welding information received by the CPU 201 of the robot control device 20 in step 17 is generated as follows.

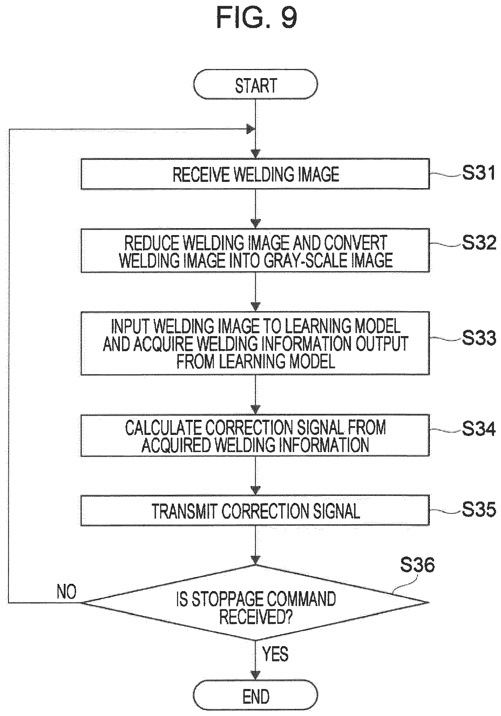

Fig. 9 is a flowchart illustrating the welding-information generation process performed by the data processing device 50 and a process involving executing welding control based on the welding information and transmitting a correction signal for each control factor to the power supply device 30. Each control factor refers to a welding condition and is, for example, the welding speed, the welding current, the arc voltage, the weaving operation, or welding-line copying. Each symbol S in the drawing denotes a step.

The CPU 511 of the data processing device 50 receives a captured welding image of the welding position from the visual sensor 40 while automatic welding is being executed (step 31).

Then, the CPU 511 reduces the received welding image and converts it into a gray-scale image (step 32). The CPU 511 reduces the size of the welding image to $120 \times 100$ pixels.

Subsequently, the CPU 511 inputs the reduced welding image to the learning model 514B and acquires welding information output from the learning model 514B (step 33).

The coordinate position (ArcX, ArcY) of the arc center, the coordinate position (WireX, WireY) of the wire tip, the coordinate position (Pool_Lead_Lx, Pool_Lead_Ly) of the left leading end of the molten pool, the coordinate position (Pool_Lead_Rx, Pool_Lead_Ry) of the right leading end of the molten pool, the coordinate position (Pool_Lx) of the left edge of the molten pool, and the coordinate position (Pool_Rx) of the right edge of the molten pool are output from the learning model 514B.

The CPU 511 performs welding control based on the acquired welding information and calculates a correction signal for each control factor (step 34).

In the case of this embodiment, a left-right-position correction amount $\Delta X$ of the welding torch 11, a speed correction amount $\Delta V$ of the welding torch 11, a set value w of the width of the weaving operation (referred to as "weaving width" hereinafter) are calculated as correction signals.

The left-right-position correction amount $\Delta X$ of the welding torch 11 is calculated in accordance with Expression (1) indicated below.

$$\mathrm{PoolCenX} = (\mathrm{Pool\_Lx} + \mathrm{Pool\_Rx})/2$$

$$\Delta X = \mathrm{PoolCenX} - X0 \qquad (1)$$

In this case, XO denotes a reference value for the position of the center of the molten pool in the left-right direction and is a preset value.

The calculated left-right-position correction amount $\Delta X$ is used for moving the welding torch 11 in the left-right direction such that a center PoolCenX of a molten pool image matches X0.

When the speed correction amount $\Delta V$ is to be calculated, a distance $\Delta L$ is first calculated in accordance with Expression (2) indicated below.

$$\mathrm{LeadY} = (\mathrm{Pool\_Lead\_Ly} + \mathrm{Pool\_Lead\_Ry})/2 - \mathrm{ArcY}$$

$$\Delta L = \mathrm{LeadY} - L0 \qquad (2)$$

In this case, L0 denotes the distance between the leading-end position of the molten pool and the arc center and is preliminarily set to a value at which a penetration bead of the highest quality can be formed.

LeadY also denotes the distance between the leading-end position of the molten pool and the arc center. However, LeadY is calculated in accordance with Expression (2) indicated above that uses Pool_Lead_Ly, Pool_Lead_Ry, and ArcY serving as image feature information extracted from the welding image.

The distance ΔL is a difference between LeadY and L0. When the distance ΔL is calculated, the speed correction amount ΔV is calculated in accordance with Expression (3) indicated below that uses a conversion coefficient β.

$$\Delta V = \Delta L \times \beta \qquad (3)$$

The set value w of the weaving width is calculated in accordance with Expression (5) or (6) indicated below.

$$Leadw = Pool\_Lead\_Rx \cdot Pool\_Lead\_Lx$$
$$if\ Leadw < w0,\ then\ w = 0 \qquad (4)$$

$$if\ Leadw \geq w0,\ then\ w = (Leadw \cdot \alpha) \qquad (5)$$

In this case, w0 denotes a gap width of the groove and is preliminarily set to a minimum value at which weaving is required.

Leadw also denotes a gap width and is a value calculated as above since the coordinate positions (Pool_Lead_Lx, Pool_Lead_Rx) of the image feature information extracted from the welding image respectively correspond to the left and right positions of the groove.

If the gap width Leadw is smaller than w0 in accordance with Expression (4) indicated above, the set value w of the weaving width is 0, so that the weaving operation is not performed.

If the gap width Leadw is larger than or equal to w0 in accordance with Expression (5) indicated above, the set value w of the weaving width is a value smaller than the gap width Leadw by α. α is a preset value.

The process in step 34 may include an additional learning-model generation process. For example, information in which welding information and welding result information are associated with each other may be used as teaching data to generate a learning model, the welding information may be input to this learning model, and a correction signal for each control factor may be output such that an optimal welding result is obtained. Examples of the welding result information include waveform data of the welding current, waveform data of the arc voltage, arc sound data during welding, bead shape data, spatter data, fume data, and welding defect data, and it is preferable that at least one of these pieces of data be treated as the welding result information.

When the calculation of the correction signal in step 34 is completed, the CPU 511 transmits the correction signal to the robot control device 20 (step 35).

Then, the CPU 511 determines whether or not a command for stopping the generation of the correction signal is received from the robot control device 20 (step 36).

If the stoppage command is not received (i.e., if a negative result is obtained n step 36), the CPU 511 returns to step 31.

In contrast, if the stoppage command is received (i.e., if a positive result is obtained in step 36), the CPU 511 ends the correction-signal generation process.

Accordingly, the automatic welding system 1 according to this embodiment executes deep learning by using, as teaching data, a welding image captured while varying the setting with respect to at least one of the welding conditions and welding information taught by the operator with respect to the welding image, thereby generating the learning model 514B. Thus, highly-reliable welding information is stably output regardless of various welding conditions set in actual welding. In other words, a highly-robust learning model is generated.

[Specific Examples]

The following description relates to how the recognition accuracy of welding information improves as a result of using the learning model 514B generated based on the technique described in the embodiment.

(1) First Specific Example

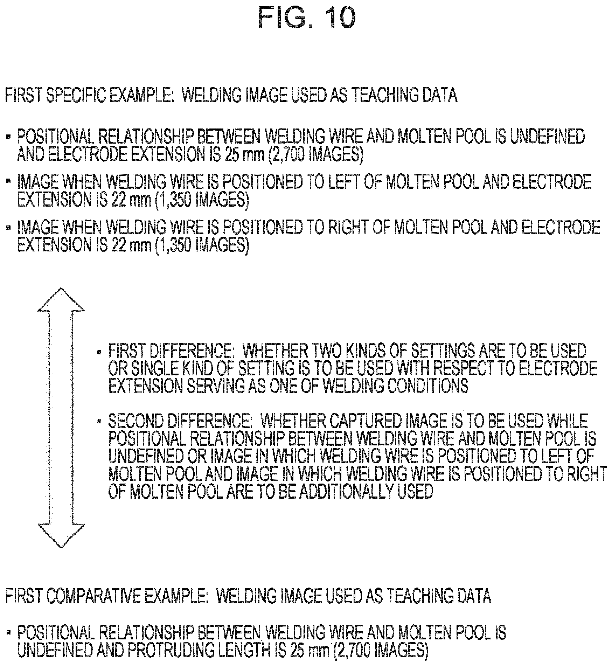

Fig. 10 illustrates an example of welding conditions used for generating teaching data. In Fig. 10, teaching data corresponding to the technique described in the embodiment will be referred to as a first specific example, whereas teaching data corresponding to the technique in the related art will be referred to as a first comparative example.

In the case of the first specific example, a total of 5,400 welding images are used as the teaching data. This number of images is twice as large as the number of welding images used in the first comparative example.

The welding images in the first specific example are different from the welding images in the first comparative example in terms of two points indicated below.

The first difference is that two types of settings are used for the electrode extension serving as one of the welding conditions. In the case of the first comparative example, a welding image is only captured in a state where the electrode extension is 25 mm, whereas in the case of the first specific example, a welding image captured in a state where the electrode extension is 22 mm is added.

The second difference is that a welding image in a case where the welding wire 13 (see Fig. 1) is positioned to the right of the molten pool and a welding image in a case where the welding wire 13 is positioned to the left of the molten pool are added.

In the case of the first comparative example, since the position of the welding wire 13 is not specified within a welding image used as teaching data, there is a possibility that a welding image captured in a state where the welding wire 13 is positioned to the right of the molten pool and a welding image captured in a state where the welding wire 13 is positioned to the left of the molten pool are also included. However, the number of images at the aforementioned positions is significantly smaller than that in the first specific example.

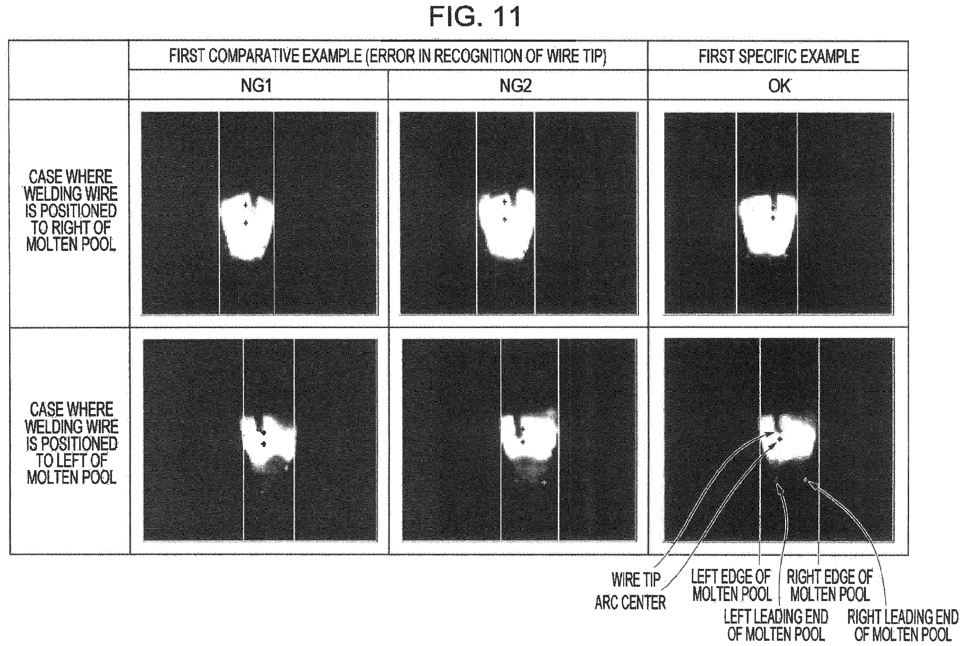

Fig. 11 illustrates an output example of welding information corresponding to the first specific example and an output example of welding information corresponding to the first comparative example.

In Fig. 11, six welding images are illustrated. The three welding images at the upper level correspond to a state where the welding wire 13 is positioned to the right of the molten pool, and the three welding images at the lower level correspond to a state where the welding wire 13 is positioned to the left of the molten pool. The welding images in the two left columns correspond to the first comparative example, whereas the welding images in the one right column correspond to the first specific example.

In each welding image, the positions of the arc center, the wire tip, the left leading end of the molten pool, the right leading end of the molten pool, the left edge of the molten pool, and the right edge of the molten pool that are recognized using the learning model 514B are indicated by circular marks.

In the case of the first comparative example, the circular mark indicating the recognition position of the wire tip appears at a position different from the actual tip of the welding wire 13 in each of the welding images. This implies that there is an error in the recognition of the wire tip. Therefore, in Fig. 11, NG1 and NG2 are given to the fields under the first comparative example.

In contrast, in the case of the first specific example, the circular mark indicating the recognition position of the wire tip is aligned with the tip of the welding wire 13 in each of the welding images. Specifically, a proper position is recognized in the case of the first specific example. In the case of the first specific example, it is confirmed that the recognition accuracy for the wire tip is improved whether the welding wire 13 is located at any position relative to the molten pool.

Furthermore, in the case of the first comparative example, when the electrode extension used for generating the learning model and the electrode extension used in the actual welding environment differ from each other, it is confirmed that the recognition accuracy for the wire tip decreases. In contrast, in the case of the specific example, highly-accurate recognition is possible regardless of the electrode extension used in the welding environment.

(2) Second Specific Example

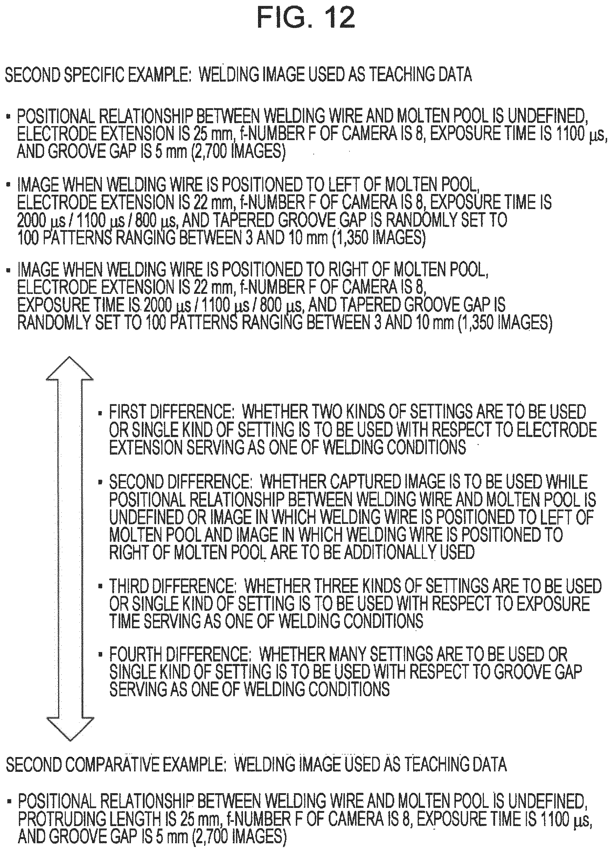

Fig. 12 illustrates another example of welding conditions used for generating teaching data. In Fig. 12, teaching data corresponding to the technique described in the embodiment will be referred to as a second specific example, whereas teaching data corresponding to the technique in the related art will be referred to as a second comparative example.

In a welding image according to the second specific example, the corresponding welding conditions are partially different from those of a welding image according to the first specific example. In the second specific example, a welding image in a case where the welding wire 13 (see Fig. 1) is positioned to the right of the molten pool and a welding image in a case where the welding wire 13 is positioned to the left of the molten pool are used as teaching data, but a plurality of settings are also taken into account with respect to an exposure time and a groove gap serving as welding conditions.

For example, in contrast to the second comparative example having a single kind of exposure time of 1,100 $\mu$s, the second specific example has three kinds of exposure times of 2,000 $\mu$s, 1,100 $\mu$s, and 800 $\mu$s.

Furthermore, in contrast to the groove gap in the second comparative example being 5 mm alone, the groove gap in the second specific example takes into account 100 patterns ranging between 3 mm and 10 mm. The value of the groove gap is randomly set.

A welding image used in the second specific example and the f-number of a camera used in the second comparative example are both F = 8.

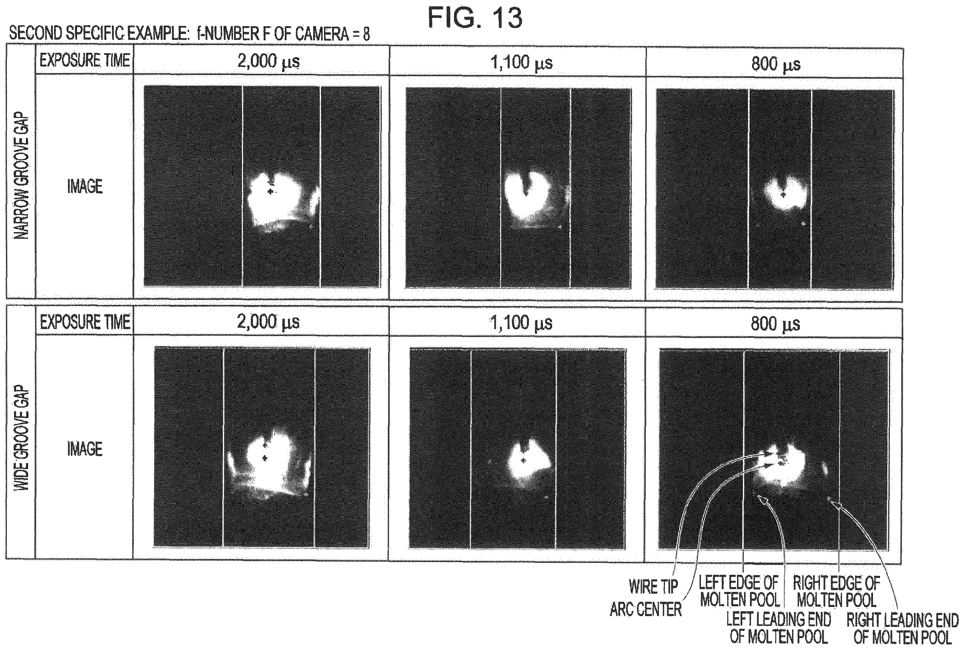

Fig. 13 illustrates an output example in the second specific example in a case where the f-number of the camera is F = 8.

In Fig. 13, six welding images are illustrated. The three welding images at the upper level correspond to a case where the groove gap is narrow, and the three welding images at the lower level correspond to a case where the groove gap is wide. The left column corresponds to a case where the exposure time is 2,000 $\mu$s, the middle column corresponds to a case where the exposure time is 1,100 $\mu$s, and the right column corresponds to a case where the exposure time is 800 $\mu$s.

In each welding image, the positions of the arc center, the wire tip, the left leading end of the molten pool, the right leading end of the molten pool, the left edge of the molten pool, and the right edge of the molten pool are properly recognized.

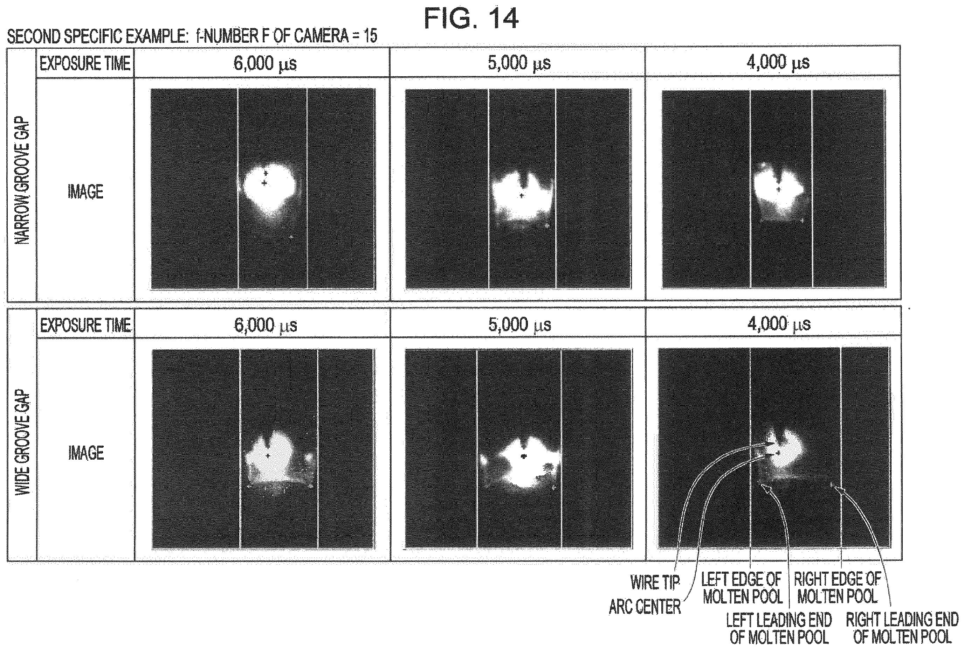

Fig. 14 illustrates an output example in the second specific example in a case where the f-number of the camera used in the real welding environment is F = 15. In the case of Fig. 14, the left column corresponds to a case where the exposure time is 6,000 $\mu$s, the middle column corresponds to a case where the exposure time is 5,000 $\mu$s, and the right column corresponds to a case where the exposure time is 4,000 $\mu$s.

In the case of Fig. 14, the exposure time and the f-number F of the camera are both different from the settings of the welding conditions used for the learning of the learning model 514B. However, in each of the welding images illustrated in Fig. 14, the welding information is accurately recognized.

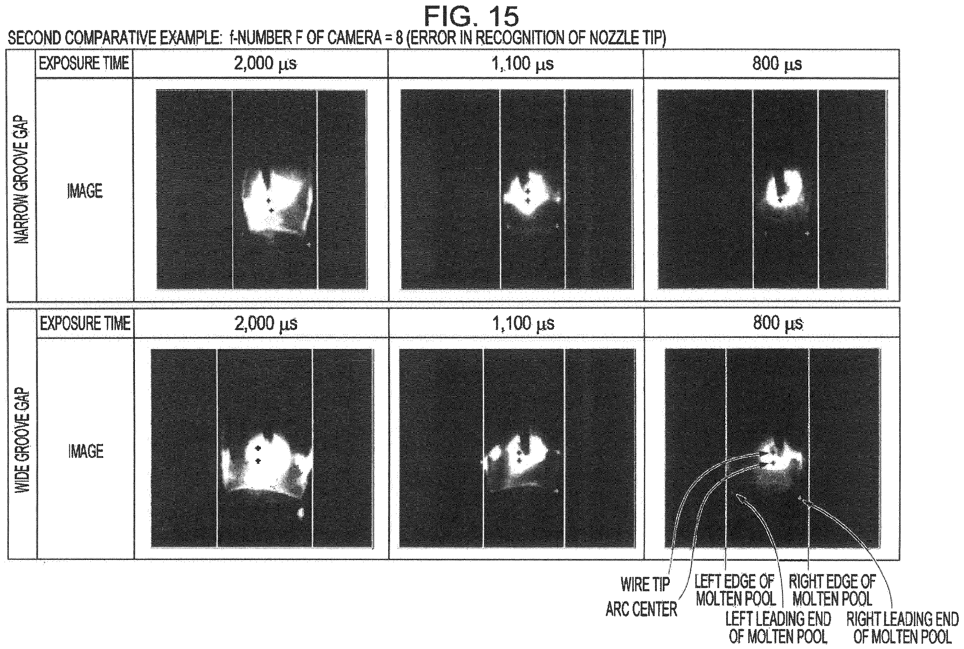

Fig. 15 illustrates an output example in the second comparative example in a case where the f-number of the camera is F = 8. In Fig. 15, sections corresponding to those in Fig. 13 are given the corresponding reference signs. Specifically, the three welding images at the upper level correspond to a case where the groove gap is narrow, and the three welding images at the lower level correspond to a case where the groove gap is wide. The left column corresponds to a case where the exposure time is 2,000 $\mu$s, the middle column corresponds to a case where the exposure time is 1,100 $\mu$s, and the right column corresponds to a case where the exposure time is 800 $\mu$s.

In each of the welding images in the case of the second comparative example, a deviation is confirmed in the recognition of any of the positions of the arc center, the wire tip, the left leading end of the molten pool, the right leading end of the molten pool, the left edge of the molten pool, and the right edge of the molten pool. For example, in the case where the exposure time is 2,000 $\mu$s, the recognized arc center and wire tip have significantly deviated from the proper positions irrespective of the width of the groove gap. Moreover, the right and left leading ends of the molten pool have also significantly deviated from the proper positions.

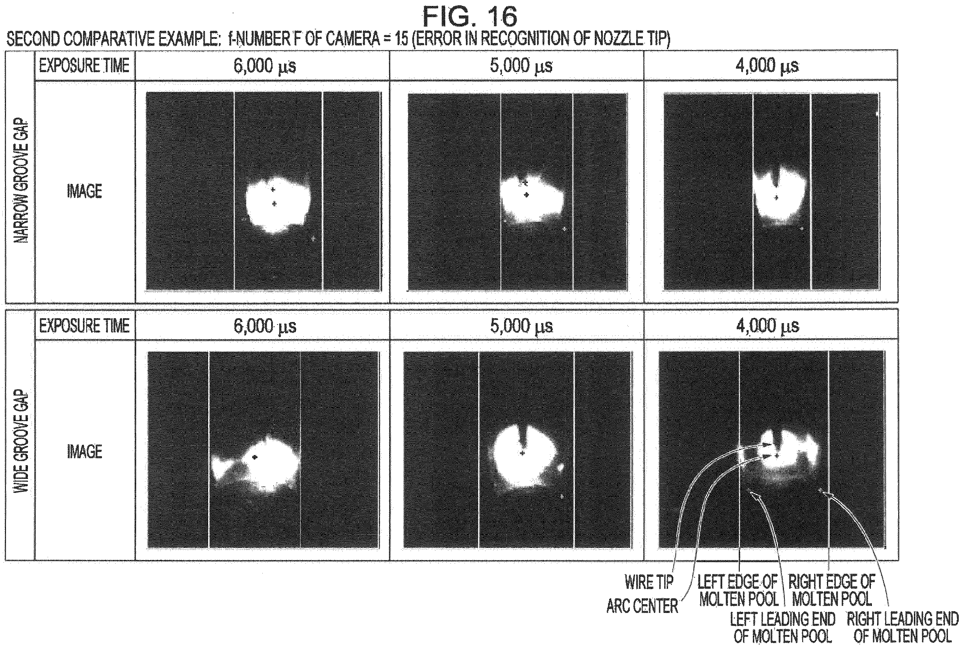

Fig. 16 illustrates an output example in the second comparative example in a case where the f-number of the camera used in the real welding environment is F = 15. In Fig. 16, sections corresponding to those in Fig. 14 are given the corresponding reference signs. Specifically, the three welding images at the upper level correspond to a case where the groove gap is narrow, and the three welding images at the lower level correspond to a case where the groove gap is wide. The left column corresponds to a case where the exposure time is 6,000 $\mu$s, the middle column corresponds to a case where the exposure time is 5,000 $\mu$s, and the right column corresponds to a case where the exposure time is 4,000 $\mu$s.

In the case of Fig. 16, a deviation is confirmed in the recognition of any of the positions of the arc center, the wire tip, the left leading end of the molten pool, the right leading end of the molten pool, the left edge of the molten pool, and the right edge of the molten pool. For example, in the case where the exposure time is 6,000 $\mu$s and the groove gap is narrow, the recognized right and left leading ends of the molten pool, as well as the right and left edges of the molten pool, have significantly deviated from the proper positions. Moreover, in the case where the exposure time is 6,000 $\mu$s and the groove gap is wide, the recognized arc center and wire tip have significantly deviated from the proper positions.

Accordingly, in the case of the second comparative example, if the welding conditions used in the real welding environment differ from the welding conditions used during learning, the recognition accuracy significantly decreases.

(3) Conclusion

As described above using the two specific examples, a welding image corresponding to a plurality of settings of at least one welding condition is prepared as teaching data used for the learning of the learning model 514B, so that the effect that a change in the exposure condition in the usage environment has on the recognition accuracy for welding information is reduced, as compared with a case where a welding image corresponding to a single setting of a single welding condition is used as teaching data.

As a result, welding control using a recognition result can be properly performed, thereby achieving improved quality in accordance with automatic welding.

[Other Embodiments]

Although the embodiment of the present invention has been described above, the technical scope of the present invention is not limited to the scope described in the above embodiment. It is obvious from the scope of the claims that an embodiment obtained by adding various modifications or alterations to the above embodiment is included in the technical scope of the present invention.

(1) For example, although consumable-electrode MIG welding or MAG welding is described as an example of arc welding in the above-described embodiment, TIG (tungsten inert gas) welding that generates an arc within an inert gas may be used. In this case, a welding image captured in a state where the setting of the shape or position of a welding material as a welding condition is changed may be additionally prepared. Furthermore, an application to welding equipment that does not generate an arc is also possible. For example, an application to electroslag welding is also possible.

(2) Although the welding robot 10 is described as being an articulated robot as an example in the above-described embodiment, the welding robot 10 may be a single-joint robot.

(3) Although the left edge of the molten pool and the right edge of the molten pool are output as welding information in the above-described embodiment, the width of the molten pool calculated from these pieces of information may be output. Furthermore, the welding information may include a leading-end width of the molten pool calculated from the left leading end of the molten pool and the right leading end of the molten pool. Moreover, the welding information may include L0 and LeadY each serving as the distance between the leading-end position of the molten pool and the arc center.

(4) In the above-described embodiment, the electrode extension serving as a welding condition is varied in units of 5 mm, as in 22 mm, 27 mm, and 32 mm, and a captured welding image indicating the state of welding with each electrode extension is used as teaching data. Alternatively, as in the first specific example, the electrode extension may be varied in units of 3 mm. It should be noted that the electrode extension used for capturing a welding image to be used as teaching data may be varied in freely-chosen units.

(5) In the above-described embodiment and the specific examples, the electrode extension serving as a welding condition is varied at the time of welding during which a welding image to be used as teaching data is to be captured. However, this does not necessary mean that the electrode extension has to be varied among welding images to be used as teaching data. Specifically, welding images captured while varying the setting or settings of one or more freely-chosen welding conditions mentioned above may be used as teaching data to generate the learning model 514B.

Although various embodiments have been described above with reference to the drawings, the present invention is not limited to these examples. It is apparent that a skilled person may conceive of various modifications and corrections within the scope defined in the claims, and it is to be understood that such modifications and corrections belong to the technical scope of the present invention. The components in the above embodiments may be freely combined so long as they do not deviate from the scope of the invention.

The present application is based on Japanese Patent Application (2020-080006) filed on April 30, 2020, the contents of which are hereby incorporated by reference.

Reference Signs List

1 automatic welding system, 10 welding robot, 11 welding torch, 12 wire feeding device, 13 welding wire, 14 material backing, 20 robot control device, 30 power supply device, 40 visual sensor, 50 data processing device, 514A learning program, 514B learning model, 514C welding-information generation program, 514D image data

**Claims**

1. A welding-information learning-model generation method for generating a learning model that outputs welding information corresponding to image data when the learning model receives the image data output from a visual sensor that captures an image indicating a state of welding,

   wherein the image data used for generating the learning model is captured with respect to a plurality of settings of at least one welding condition,
   wherein the image data includes at least one of a molten pool, a welding wire, and an arc,
   wherein the welding information includes at least one of information related to behavior of the molten pool, information related to a position of the welding wire, and information related to the arc, and
   wherein the learning model is generated by using, as teaching data, the image data and the welding information corresponding to the image data.

2. The welding-information learning-model generation method according to claim 1,

wherein the image data corresponds to at least two settings related to at least one of an electrode extension of the welding wire, a shape of a nozzle, lightness of the image data, a shape of an object to be welded, a shape of a contact tip, a welding current, an arc voltage, a welding speed, a weaving condition, and a welding position.

3. The welding-information learning-model generation method according to claim 2,

wherein the at least one welding condition is the electrode extension of the welding wire, and
wherein the electrode extension is set to a plurality of values selected at least from a range of 10 to 40 mm.

4. The welding-information learning-model generation method according to any one of claims 1 to 3, wherein the information related to the behavior of the molten pool includes information about at least one position of a leading end of the molten pool appearing in a direction in which the welding proceeds and information about positions of left and right edges of the molten pool relative to the direction in which the welding proceeds.

5. The welding-information learning-model generation method according to any one of claims 1 to 3, wherein the information related to the position of the welding wire includes information about a position of a tip of the welding wire.

6. The welding-information learning-model generation method according to any one of claims 1 to 3, wherein the information related to the arc includes information about a center point of the arc.

7. A learning model that outputs welding information corresponding to image data when the learning model receives the image data output from a visual sensor that captures an image indicating a state of welding,

wherein the image data used for generating the learning model is captured with respect to a plurality of settings of at least one welding condition,
wherein the image data includes at least one of a molten pool, a welding wire, and an arc,
wherein the welding information includes at least one of information related to behavior of the molten pool, information related to a position of the welding wire, and information related to the arc, and
wherein the learning model is generated by using, as teaching data, the image data and the welding information corresponding to the image data.

8. A program for causing a computer to implement a function for generating a learning model that outputs welding information corresponding to image data when the learning model receives the image data output from a visual sensor that captures an image indicating a state of welding,

wherein the function uses, as teaching data, the image data and the welding information corresponding to the image data,
wherein the image data used for generating the learning model is captured with respect to a plurality of settings of at least one welding condition,
wherein the image data includes at least one of a molten pool, a welding wire, and an arc, and
wherein the welding information includes at least one of information related to behavior of the molten pool, information related to a position of the welding wire, and information related to the arc.

9. A welding system comprising:

welding equipment that welds an object to be welded;
a visual sensor that captures an image indicating a state of welding;
a learning model that outputs welding information corresponding to image data when the learning model receives the image data output from the visual sensor; and
a control device that controls movement of the welding equipment by using the welding information to be output in a case where the image data captured by the visual sensor is input to the learning model,
wherein the image data used for generating the learning model is captured with respect to a plurality of settings of at least one welding condition,
wherein the image data includes at least one of a molten pool, a welding wire, and an arc,
wherein the welding information includes at least one of information related to behavior of the molten pool, information related to a position of the welding wire, and information related to the arc, and
wherein the control device generates the learning model by using, as teaching data, the image data and the welding information corresponding to the image data.

**10.** The welding system according to claim 9,
wherein an additional learning model is provided in addition to the learning model that outputs the welding information corresponding to the image data, the additional learning model receiving the welding information output from the learning model and outputting a correction signal of the welding information.

# FIG. 1

# FIG. 2

# FIG. 3

20

201

CPU

203

OPERATION PANEL

204

TEACHING PENDANT

202

MEMORY

202A

CONTROL PROGRAM

30

POWER SUPPLY DEVICE

10

WELDING ROBOT

205

INPUT-OUTPUT UNIT

206

COMMUNICATION UNIT

# FIG. 4

# FIG. 5

WELDING INFORMATION
(TEACHING DATA)
  ArcX
  ArcY
  WireX
  WireY
  Pool_Lead_Lx
  Pool_Lead_Ly
  Pool_Lead_Rx
  Pool_Lead_Ry
  Pool_Lx
  Pool_Rx

PREPARE TEACHING DATA WITH CHANGED SETTING WITH RESPECT TO AT LEAST ONE ITEM OF WELDING CONDITION (E.G., ELECTRODE EXTENSION: 22 mm AND 27 mm)

ERROR FEEDBACK

514B

WELDING IMAGE
(TEACHING DATA)

CONVOLUTIONAL LAYER — POOLING LAYER — CONVOLUTIONAL LAYER — POOLING LAYER — CONVOLUTIONAL LAYER — POOLING LAYER — FULLY CONNECTED LAYER — FULLY CONNECTED LAYER

WELDING INFORMATION
  ArcX
  ArcY
  WireX
  WireY
  Pool_Lead_Lx
  Pool_Lead_Ly
  Pool_Lead_Rx
  Pool_Lead_Ry
  Pool_Lx
  Pool_Rx

# FIG. 6

13

16

WIRE TIP

ARC CENTER

15

LEFT EDGE OF
MOLTEN POOL

RIGHT EDGE OF
MOLTEN POOL

LEFT LEADING END
OF MOLTEN POOL

RIGHT LEADING END
OF MOLTEN POOL

# FIG. 7

```
            ┌─────────────┐
            │    START    │
            └──────┬──────┘
                   │
                   ▼
   ┌───────────────────────────────────────┐
   │ RECEIVE, AS TEACHING DATA, CAPTURED    │
   │ IMAGE DATA OF WELDING PERFORMED WHILE  │──S1
   │ CHANGING SETTING WITH RESPECT TO AT    │
   │ LEAST ONE WELDING CONDITION AND        │
   │ WELDING INFORMATION TAUGHT             │
   │ WITH RESPECT TO IMAGE DATA             │
   └───────────────────┬───────────────────┘
          ┌────────────┤
          │            ▼
          │  ┌─────────────────────────────┐
          │  │ PERFORM TEACHING-LEARNING    │──S2
          │  │ PROCESS                      │
          │  └──────────────┬──────────────┘
          │                 │              S3
          │                 ▼
       NO │  ◇───────────────────────────◇
          └──│ IS TERMINATION CONDITION   │
             │         SATISFIED?         │
             ◇───────────────┬───────────◇
                             │ YES
                             ▼
                    ┌─────────────┐
                    │     END     │
                    └─────────────┘
```

22

# FIG. 8

ROBOT CONTROL DEVICE 20

START

S11
RECEIVE TEACHING PROGRAM,
VARIOUS SET VALUES,
AND WELDING START COMMAND

S12
START WELDING

S15
PERFORM WELDING   S151
CONTROL

PERFORM AUTOMATIC
WELDING CONTROL

S152
PERFORM WEAVING CONTROL

S153
PERFORM WELDING-LINE
COPYING CONTROL

S17
RECEIVE WELDING
INFORMATION

S16
NO — DOES WELDING NEED
TO BE STOPPED?

YES   S18
STOP WELDING CONTROL

S19
GIVE COMMAND FOR STOPPING WELDING

S20
GIVE COMMAND FOR STOPPING
GENERATION OF WELDING INFORMATION

END

POWER SUPPLY DEVICE 30

START

S13
RECEIVE COMMAND

S14
START WELDING

S21
RECEIVE COMMAND

S22
STOP WELDING

END

23

# FIG. 9

START

RECEIVE WELDING IMAGE — S31

REDUCE WELDING IMAGE AND CONVERT
WELDING IMAGE INTO GRAY-SCALE IMAGE — S32

INPUT WELDING IMAGE TO LEARNING MODEL
AND ACQUIRE WELDING INFORMATION OUTPUT
FROM LEARNING MODEL — S33

CALCULATE CORRECTION SIGNAL FROM
ACQUIRED WELDING INFORMATION — S34

TRANSMIT CORRECTION SIGNAL — S35

S36

NO — IS STOPPAGE COMMAND
RECEIVED?

YES

END

# FIG. 10

FIRST SPECIFIC EXAMPLE: WELDING IMAGE USED AS TEACHING DATA

- POSITIONAL RELATIONSHIP BETWEEN WELDING WIRE AND MOLTEN POOL IS UNDEFINED AND ELECTRODE EXTENSION IS 25 mm (2,700 IMAGES)

- IMAGE WHEN WELDING WIRE IS POSITIONED TO LEFT OF MOLTEN POOL AND ELECTRODE EXTENSION IS 22 mm (1,350 IMAGES)

- IMAGE WHEN WELDING WIRE IS POSITIONED TO RIGHT OF MOLTEN POOL AND ELECTRODE EXTENSION IS 22 mm (1,350 IMAGES)

- FIRST DIFFERENCE: WHETHER TWO KINDS OF SETTINGS ARE TO BE USED OR SINGLE KIND OF SETTING IS TO BE USED WITH RESPECT TO ELECTRODE EXTENSION SERVING AS ONE OF WELDING CONDITIONS

- SECOND DIFFERENCE: WHETHER CAPTURED IMAGE IS TO BE USED WHILE POSITIONAL RELATIONSHIP BETWEEN WELDING WIRE AND MOLTEN POOL IS UNDEFINED OR IMAGE IN WHICH WELDING WIRE IS POSITIONED TO LEFT OF MOLTEN POOL AND IMAGE IN WHICH WELDING WIRE IS POSITIONED TO RIGHT OF MOLTEN POOL ARE TO BE ADDITIONALLY USED

FIRST COMPARATIVE EXAMPLE: WELDING IMAGE USED AS TEACHING DATA

- POSITIONAL RELATIONSHIP BETWEEN WELDING WIRE AND MOLTEN POOL IS UNDEFINED AND PROTRUDING LENGTH IS 25 mm (2,700 IMAGES)

# FIG. 11

| | FIRST COMPARATIVE EXAMPLE (ERROR IN RECOGNITION OF WIRE TIP) | | FIRST SPECIFIC EXAMPLE |
| --- | --- | --- | --- |
| | NG1 | NG2 | OK |
| CASE WHERE WELDING WIRE IS POSITIONED TO RIGHT OF MOLTEN POOL | | | |
| CASE WHERE WELDING WIRE IS POSITIONED TO LEFT OF MOLTEN POOL | | | |

WIRE TIP
ARC CENTER

LEFT EDGE OF MOLTEN POOL
RIGHT EDGE OF MOLTEN POOL

LEFT LEADING END OF MOLTEN POOL
RIGHT LEADING END OF MOLTEN POOL

EP 4 063 056 A1

# FIG. 12

SECOND SPECIFIC EXAMPLE: WELDING IMAGE USED AS TEACHING DATA

- POSITIONAL RELATIONSHIP BETWEEN WELDING WIRE AND MOLTEN POOL IS UNDEFINED, ELECTRODE EXTENSION IS 25 mm, f-NUMBER F OF CAMERA IS 8, EXPOSURE TIME IS 1100 μs, AND GROOVE GAP IS 5 mm (2,700 IMAGES)

- IMAGE WHEN WELDING WIRE IS POSITIONED TO LEFT OF MOLTEN POOL, ELECTRODE EXTENSION IS 22 mm, f-NUMBER F OF CAMERA IS 8, EXPOSURE TIME IS 2000 μs / 1100 μs / 800 μs, AND TAPERED GROOVE GAP IS RANDOMLY SET TO 100 PATTERNS RANGING BETWEEN 3 AND 10 mm (1,350 IMAGES)

- IMAGE WHEN WELDING WIRE IS POSITIONED TO RIGHT OF MOLTEN POOL, ELECTRODE EXTENSION IS 22 mm, f-NUMBER F OF CAMERA IS 8, EXPOSURE TIME IS 2000 μs / 1100 μs / 800 μs, AND TAPERED GROOVE GAP IS RANDOMLY SET TO 100 PATTERNS RANGING BETWEEN 3 AND 10 mm (1,350 IMAGES)

- FIRST DIFFERENCE: WHETHER TWO KINDS OF SETTINGS ARE TO BE USED OR SINGLE KIND OF SETTING IS TO BE USED WITH RESPECT TO ELECTRODE EXTENSION SERVING AS ONE OF WELDING CONDITIONS

- SECOND DIFFERENCE: WHETHER CAPTURED IMAGE IS TO BE USED WHILE POSITIONAL RELATIONSHIP BETWEEN WELDING WIRE AND MOLTEN POOL IS UNDEFINED OR IMAGE IN WHICH WELDING WIRE IS POSITIONED TO LEFT OF MOLTEN POOL AND IMAGE IN WHICH WELDING WIRE IS POSITIONED TO RIGHT OF MOLTEN POOL ARE TO BE ADDITIONALLY USED

- THIRD DIFFERENCE: WHETHER THREE KINDS OF SETTINGS ARE TO BE USED OR SINGLE KIND OF SETTING IS TO BE USED WITH RESPECT TO EXPOSURE TIME SERVING AS ONE OF WELDING CONDITIONS

- FOURTH DIFFERENCE: WHETHER MANY SETTINGS ARE TO BE USED OR SINGLE KIND OF SETTING IS TO BE USED WITH RESPECT TO GROOVE GAP SERVING AS ONE OF WELDING CONDITIONS

SECOND COMPARATIVE EXAMPLE: WELDING IMAGE USED AS TEACHING DATA

- POSITIONAL RELATIONSHIP BETWEEN WELDING WIRE AND MOLTEN POOL IS UNDEFINED, PROTRUDING LENGTH IS 25 mm, f-NUMBER F OF CAMERA IS 8, EXPOSURE TIME IS 1100 μs, AND GROOVE GAP IS 5 mm (2,700 IMAGES)

FIG. 13

## FIG. 14

SECOND SPECIFIC EXAMPLE: f-NUMBER F OF CAMERA = 15

| | EXPOSURE TIME | 6,000 µs | 5,000 µs | 4,000 µs |
|---|---|---|---|---|
| NARROW GROOVE GAP | IMAGE | | | |
| | EXPOSURE TIME | 6,000 µs | 5,000 µs | 4,000 µs |
| WIDE GROOVE GAP | IMAGE | | | |

RIGHT LEADING END OF MOLTEN POOL

RIGHT EDGE OF MOLTEN POOL

LEFT EDGE OF MOLTEN POOL

LEFT LEADING END OF MOLTEN POOL

WIRE TIP

ARC CENTER

# FIG. 15

SECOND COMPARATIVE EXAMPLE: f-NUMBER F OF CAMERA = 8 (ERROR IN RECOGNITION OF NOZZLE TIP)

| NARROW GROOVE GAP | EXPOSURE TIME | 2,000 μs | 1,100 μs | 800 μs |
|---|---|---|---|---|
| | IMAGE | | | |

| WIDE GROOVE GAP | EXPOSURE TIME | 2,000 μs | 1,100 μs | 800 μs |
|---|---|---|---|---|
| | IMAGE | | | |

WIRE TIP
ARC CENTER
LEFT EDGE OF MOLTEN POOL
RIGHT EDGE OF MOLTEN POOL
LEFT LEADING END OF MOLTEN POOL
RIGHT LEADING END OF MOLTEN POOL

EP 4 063 056 A1

# FIG. 16

SECOND COMPARATIVE EXAMPLE:  f-NUMBER F OF CAMERA = 15 (ERROR IN RECOGNITION OF NOZZLE TIP)

| | EXPOSURE TIME | 6,000 μs | 5,000 μs | 4,000 μs |
|---|---|---|---|---|
| NARROW GROOVE GAP | IMAGE | | | |

| | EXPOSURE TIME | 6,000 μs | 5,000 μs | 4,000 μs |
|---|---|---|---|---|
| WIDE GROOVE GAP | IMAGE | | | |

WIRE TIP
ARC CENTER
LEFT EDGE OF MOLTEN POOL
RIGHT EDGE OF MOLTEN POOL
LEFT LEADING END OF MOLTEN POOL
RIGHT LEADING END OF MOLTEN POOL

EP 4 063 056 A1

## INTERNATIONAL SEARCH REPORT

| International application No. |
| --- |
| PCT/JP2021/013400 |

A. CLASSIFICATION OF SUBJECT MATTER
B23K 9/095(2006.01)i; G06N 20/00(2019.01)i
FI: B23K9/095 501A; B23K9/095 510A; G06N20/00 130

According to International Patent Classification (IPC) or to both national classification and IPC

B. FIELDS SEARCHED

Minimum documentation searched (classification system followed by classification symbols)
B23K9/095; G06N20/00

Documentation searched other than minimum documentation to the extent that such documents are included in the fields searched
Published examined utility model applications of Japan        1922-1996
Published unexamined utility model applications of Japan      1971-2021
Registered utility model specifications of Japan              1996-2021
Published registered utility model applications of Japan      1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2018-192524 A (KOBE STEEL, LTD.) 06 December 2018 (2018-12-06) paragraphs [0033]-[0188], fig. 1-38 | 1-10 |
| Y | WO 2020/039948 A1 (KOBE STEEL, LTD.) 27 February 2020 (2020-02-27) paragraphs [0058]-[0064], fig. 13-15 | 1-10 |
| A | JP 2007-181871 A (KAWASAKI HEAVY INDUSTRIES, LTD.) 19 July 2007 (2007-07-19) claim 1 | 1-10 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 15 April 2021 (15.04.2021) | 27 April 2021 (27.04.2021) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

International application No.

PCT/JP2021/013400

| Patent Documents referred in the Report | Publication Date | Patent Family | Publication Date |
|---|---|---|---|
| JP 2018-192524 A | 06 Dec. 2018 | (Family: none) | |
| WO 2020/039948 A1 | 27 Feb. 2020 | (Family: none) | |
| JP 2007-181871 A | 19 Jul. 2007 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017030014 A
- JP 2020080006 A